(19) Europäisches Patentamt
European Patent Office
Office européen des brevets

(11) Numéro de publication: **0 050 349**
**B1**

(12) **FASCICULE DE BREVET EUROPEEN**

(45) Date de publication du fascicule du brevet: **10.07.85**

(51) Int. Cl.⁴: **C 08 G 63/68**

(21) Numéro de dépôt: **81108502.6**

(22) Date de dépôt: **24.01.80**

(60) Numéro de publication de la demande initiale en application de l'article 76 CBE:

(54) **(Co) polycarbonates comportant dans la chaîne macromoléculaire des motifs dérivés d'un diester d'acide alcoyl phosphonique.**

(30) Priorité: **05.02.79 FR 7902836**

(43) Date de publication de la demande: **28.04.82 Bulletin 82/17**

(45) Mention de la délivrance du brevet: **10.07.85 Bulletin 85/28**

(84) Etats contractants désignés: **DE IT NL**

(56) Documents cités:
**DE - A - 1 495 378**
**DE - A - 2 114 236**

(73) Titulaire: **ATO CHIMIE, La Défense 5 12/16 Allée des Vosges, F-92400 Courbevoie (FR)**

(72) Inventeur: **Poisson, Pierre 28 "Les Logis", Avenue du Président Kennedy, F-27300 Bernay (FR)**
Inventeur: **Sturtz, Georges, 22, rue Léon Blum, F-29200 Brest (FR)**

(74) Mandataire: **Boillot, Marc, SOCIETE NATIONALE ELF AQUITAINE Département Propriété Industrielle Tour Aquitaine - Cedex No 4, F-92080 Paris la Défense (FR)**

**EP 0 050 349 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne des (co)polycarbonates comportant dans la chaîne macromoléculaire des motifs dérivés d'un diester d'acide bis(hydroxy-4 phényl)alcoyl phosphonique et présentant de bonnes qualités de résistance au feu.

Les polycarbonates sont par eux-mêmes des matériaux autoextinguibles. Mais pour un certain nombre d'applications concernant le batîment, l'électro-ménager, l'industrie aéronautique, il est nécessaire d'obtenir une résistance au feu améliorée par rapport à celle du polycarbonate lui-même.

Comme agents ignifugeants des polycarbonates on a déjà fait usage de produits halogénés tels que le décabromodiphényl éther comme additif ou le tétrachloro ou le tétrabromobisphénol A comme agent de polycondensation. Mais la présence de ces produits présente l'inconvénient de conduire à des matériaux susceptibles de dégager au moment de la combustion des acides halohydriques (HCl ou HBr) qui sont toxiques et corrosifs.

Les dérivés du phosphore sont connus pour améliorer la résistance au feu d'un grand nombre de polymères. Ils ne sont ni toxiques ni corrosifs au cours de la combustion et on a pensé à utiliser les dérivés du phosphore en tant qu'agents ignifugeants des polycarbonates. Les dérivés du phosphore possèdent des propriétés d'inhibiteur de combustion. Leur action consisterait dans la formation de résidus charbonneux et de matières incombustibles qui ralentissent la diffusion des gaz combustibles vers la zone de combustion.

Des travaux antérieurs font état de l'introduction de l'atome de phosphore dans la chaîne macromoléculaire (FR-A-1 402 407; DE-A-1 199 499; US-A-3 378 523; JA-A-7 572 936) parmi lesquels sont décrits les copolycondensats de formule

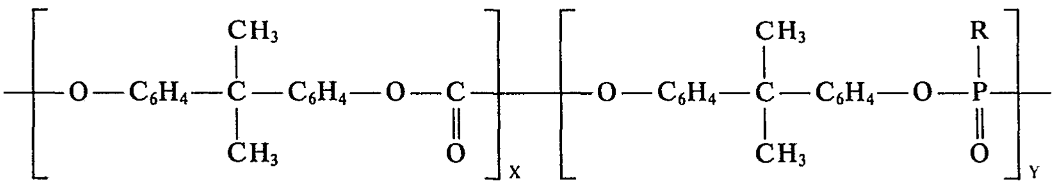

ils ont une faible stabilité à l'hydrolyse de la fonction phosphonique dont l'attaque conduit à une dégradation chimique de la chaîne macromoléculaire.

Des polymères plus stables de formule

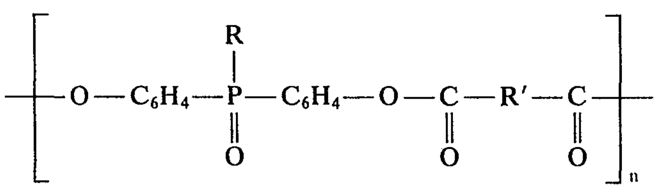

ont été synthétisés (J. of polymer Science 1974 p. 2357) à partir d'oxydes de phosphine. Mais la synthèse des oxydes de phosphine est difficile à réaliser dans la pratique. Iliopoulos et Wieder (US-A-3 847 866 et Angewandte Chem. 1965, 77, 618) ont obtenu un polycarbonate comportant des groupements phosphonates »pendants« par réaction interfaciale de bis(hydroxy-4 phényl)-1,1 éthylphosphonate de diméthyle avec du phosgène.

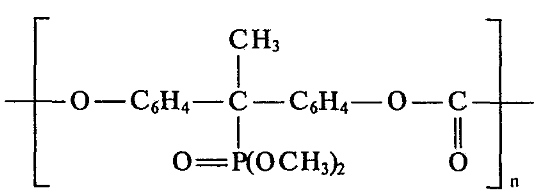

Les groupements phosphonates étant à l'extérieur de la chaîne macromoléculaire ces polymères sont peu sensibles aux phénomènes de dégradation par hydrolyse.

Mais ils présentent l'inconvénient d'être trop rigides pour certaines applications et d'avoir des points de transition vitreuse élevés ce qui rend leur façonnage laborieux.

D'autre part l'emploi de proportions notables d'un dérivé phosphoré dans le polymère peut augmenter le coût du copolymère obtenu dans des proportions trop importantes.

La présente invention remédie à ces inconvénients.

Elle concerne des (co)polycarbonates comportant dans la chaîne macromoléculaire des motifs dérivés d'un diester d'acide bis(hydroxy-4 phényl) alcoylphosphonique de formule générale:

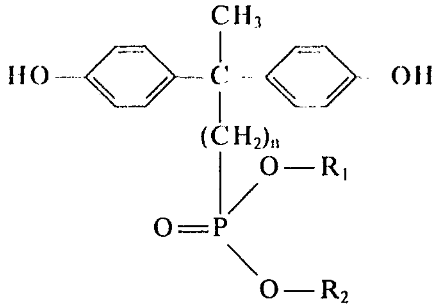

(I)

dans laquelle $R_1$ et $R_2$ sont des radicaux méthyle ou éthyle, et n est égal à 1, 2 ou 3.

Ces produits de formule I ainsi que leur préparation ont été décrits dans FR-A-2 444 685 (demande de brevet français N°78 35.753 du 20 Décembre 1978).

Ces diesters de formule I permettent d'obtenir soit des homopolycarbonates de formule

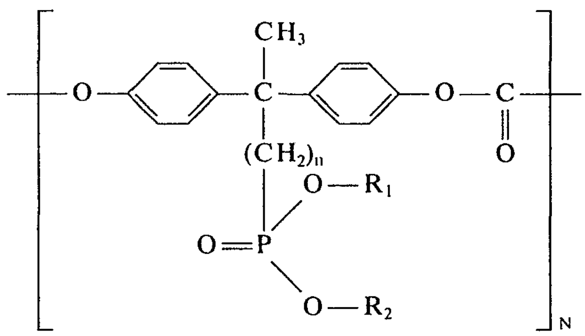

qui peuvent être utilisés comme agents ignifugeants en addition à d'autres polymères, soit des copolycarbonates par cocondensation avec le bisphénol A avec lequel on obtient des produits de formule:

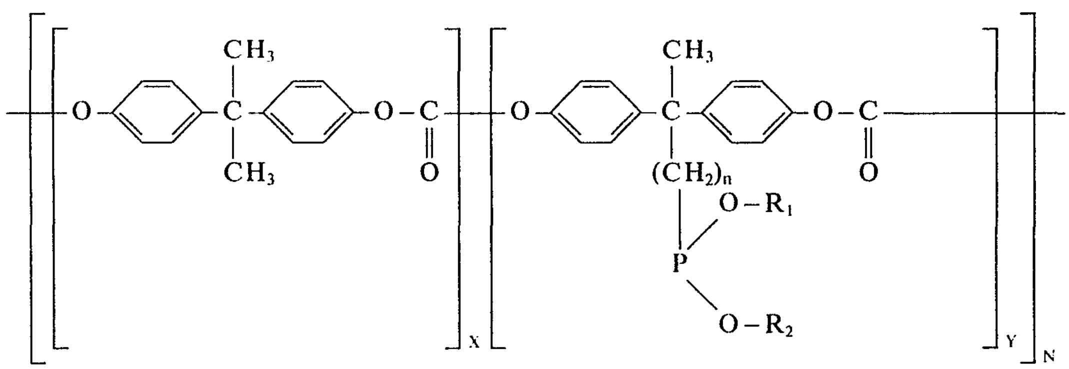

ou X et Y représentent les proportions molaires dans le motif de récurrence, et N indique la répétition.

Pour un comportement au feu de L. O. I. compris entre 31 et 36 la proportion molaire des diesters devra être de 10 à 75% du total monomères.

Le choix de R dans le groupement

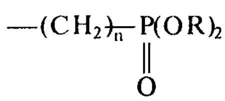

ainsi que la longueur de la chaîne aliphatique $-(CH_2)_n-$ lorsque n = 1, 2 ou 3, permet d'abaisser la température de transition vitreuse Tg par un effet de »plastification interne«. Celui-ci a l'avantage d'être permanent et peut permettre une mise en oeuvre à des températures plus basses et d'obtenir également des plastiques moins rigides.

La présence des groupements

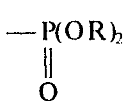

peut apporter également aux matériaux plastiques des caractères internes d'adhésivité.

Les polycarbonates et copolycarbonates obtenus selon l'invention sont transparents et possèdent en outre une bonne stabilité thermique à 250°C ce qui permet de les mettre en oeuvre sans craindre de dégradation moléculaire.

Comme bis(hydroxy-4 phényl)alkylphosphonate de dialkyle on peut utiliser le bis(hydroxy-4 phényl)-2,2 propylphosphonate de diméthyle, le bis(hydroxy-4 phényl)-2,2 propylphosphonate de diéthyle, le bis(hydroxy-4 phényl)-3,3 butylphosphonate de diméthyle.

Ces bisphénols phosphonates peuvent être utilisés seuls ou en mélange avec le bisphénol A.

Les polycarbonates et copolycarbonates de cette invention ont été réalisés par le procédé de phosgénation interfaciale. Cette technique, connue en soi, consiste à dissoudre les bisphénols dans une solution aqueuse d'un hydroxyde alcalin de préférence, la soude ou la potasse caustique employés en excès de 10 à 50% molaire par rapport au bisphénol et on ajoute un solvant non miscible convenable pour dissoudre le polycarbonate formé.

Les solvants généralement utilisés sont des hydrocarbures chlorés tels que le chlorure de méthylène, le chloroforme et le 1,2 dichloréthane.

On fait réagir sur les bisphénolates de sodium (ou de potassium) le phosgène, qui peut être introduit en solution dans le toluène à 20% mais également sous forme gazeuse.

La réaction s'effectue entre 5 et 25°C, de préférence entre 5 et 15°C. Elle peut être catalysée par des amines tertiaires tels que la triéthylamine mais également par des sels d'ammonium quaternaire ou des sels de phosphonium.

Le chlorure de triéthylbenzyl ammonium et le chlorure de triphénylbenzyl phosphonium conduisent à des masses plus élevées. Les quantités de catalyseur peuvent être comprises entre 1 et 5% de préférence 1 et 3% molaire par rapport aux bisphénols.

La phosgénation peut également être conduite en présence d'interrupteur de chaînes comme par exemple les alcools (méthanol, éthanol) et les phénols (tels que le phénol, le diméthyl-2,6 phénol).

On utilise le phénol à raison de 1% à 2% molaire par rapport aux bisphénols.

L'addition de phosgène terminée, on poursuit la polycondensation pendant une durée qui peut aller de 30 min à 3 h, de préférence 1 à 2 h, à une température voisine de 30°C.

Les polycarbonates peuvent être isolés par des méthodes connues. Ainsi, par exemple, on sépare la phase aqueuse, on lave la phase organique à plusieurs reprises avec de l'eau jusqu'à neutralité des eaux de lavage. On verse ensuite la phase organique dans un non solvant du polycarbonate tel que l'éther. Le polycarbonate précipité est essoré puis séché sous pression réduite à 100—120°C pendant 24 à 48 heures.

Il existe, pour évaluer la combustion des polymères, un nombre important de tests, mais il est de plus en plus admis que l'essai de détermination de l'indice d'oxygène est un moyen pour caractériser les qualités des matériaux dans leur comportement au feu. Cette méthode permet d'évaluer la combustion des polymères dans une atmosphère à concentration définie et variable en oxygène. L'indice limite d'oxygène (L. O. I.) est donné par la formule.

$$L.O.I. = \frac{(O_2)}{(O_2) + (N_2)} \times 100$$

$(O_2)$ et $(N_2)$ sont les concentrations en oxygène et en azote dans le mélange de combustion utilisé pour brûler le matériau soumis à l'essai. De plus amples détails sont donnés dans la norme ASTM D-2863, 70.

Les masses moléculaires ont été déterminées par chromatographie sur gel perméable (GPC) selon cette méthode: on injecte la solution obtenue dans un appareil chromatographique WATERS, type »GPC 200« travaillant dans les conditions suivantes:

- jeu de 6 colonnes de styragel® de porosité allant de $10^6$ à 70 nm (700 Å),
- solvant: THF à température ambiante, débit 1,25 ml/min,
- quantité injectée: 2 ml à 0,25% (poids/volume). Les résultats ont été obtenus par étalonnage universel au moyen de fractions étroites de polystyrène WATERS.

Les mesures des températures de transition vitreuse Tg ont été effectuées sur un appareil HERAEUS, type TA 500 S selon les conditions suivantes:

- cellule: DSC (differential scanning calorimetry),
- référence: capsule vide,
- vitesse de chauffage: 10°C $min^{-1}$,
- conditions de mesure: le produit est chauffé une première fois puis refroidi rapidement, la température de transition vitreuse est déterminée au second chauffage.

La stabilité thermique des polycarbonates a été déterminée sur thermobalance METTLER, type HE 20 équipée d'un programmateur linéaire de température.

Poids de la prise d'échantillon 100 mg.
Atmosphère: air.
Montée en température: 6°C $min^{-1}$ puis isotherme 250°C.
Les exemples suivants sont donnés à titre illustratif et non limitatif:

Exemple 1

Polycarbonate de bis(hydroxy-4 phényl)-2,2 propylphosphonate de diéthyle

Dans un ballon de 1 litre à 5 tubulures équipé d'un agitateur, d'un réfrigérant ascendant, d'un thermomètre, d'une ampoule d'introduction et d'une électrode pour mesurer le pH on dissout 36,4 g des bis-(hydroxy-4 phényl)-2,2 propylphosphonate de diéthyle (0,1 mole) dans 150 ml d'une solution de soude 1,56 N préparée par dissolution de 9,4 g de soude en pastilles (0,235 mole) dans 150 ml d'eau permutée.

A la solution obtenue, on introduit successivement: 0,35 g de chlorure de triéthylbenzyl ammonium (1,5% molaire par rapport au bisphénol phosphonate), 0,1 g de phénol (1% molaire par rapport au bisphénol phosphonate), puis 170 ml de chlorure de méthylène préalablement passé sur tamis moléculaire 0,4 nm (4 Å) pour éliminer les alcools (méthanol et éthanol) de stabilisation.

Le milieu réactionnel est refroidi sous courant d'azote vers 5°C puis on introduit sous forte agitation en une heure 58 ml (0,11 mole) d'une solution toluénique à 20% en phosgène.

La température est maintenue entre 5 et 15°C, le pH est supérieur à 9 pendant la durée d'introduction de la solution de phosgène.

L'addition terminée, on maintient l'émulsion par forte agitation sous courant d'azote 1 heure à 30°C (±2°C). Après refroidissement on dilue avec 300 ml de $CH_2Cl_2$ et on décante.

La phase organique est lavée plusieurs fois par 150 ml d'eau, jusqu'à neutralité des eaux de lavage puis versée lentement dans 1,7 l d'éther sous agitation.

Le polycarbonate précité est séché partiellement, broyé, puis séché à 100/110°C sous pression réduite pendant au moins 24 heures.

Le polycarbonate a été obtenu avec un rendement de 76,5%

Les masses moléculaires apparentes sont relatives à l'homopolycarbonate de bisphénol A.

$\overline{Mw}$ = 20700
$\overline{Mn}$ = 7600
Indice de polydispersité: I = 2,7

Analyse élémentaire

| | % calculé | % trouvé |
|---|---|---|
| Phosphore | 7,90 | 8,27 |

L. O. I = 29

Température de transition vitreuse Tg = 118°C

Spectre RMN $^{A}$H (solvant CD $Cl_3$):

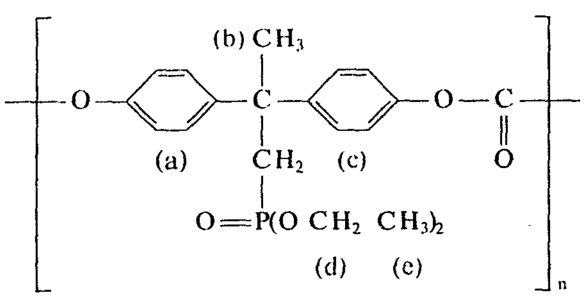

| | |
|---|---|
| $\delta$ = 7,22 ppm (singulet) | 8 Ha |
| $\delta$ = 3,75 ppm (quintuplet) | 4 Hd |
| $\delta$ = 2,68 ppm (doublet) | 2 Hc, JP – Hc = 20 Hz |
| $\delta$ = 1,95 ppm (singulet) | 4 Hb |
| $\delta$ = 1,12 ppm (triplet) | 6 He |

## Exemple 2

### Polycarbonate de bis(hydroxy-4 phényl)-2,2 propane

Cet essai a été réalisé à titre comparatif avec le bisphénol A.

Les conditions opératoires sont celles décrites dans l'exemple 1. L'essai a été réalisé avec 0,1 mole soit 22,8 g de bisphénol A.

Le rendement en polycarbonate de bisphénol A est de 90%

Les masses moléculaires (GPC)

$\overline{M}w$ = 69 600
$\overline{M}n$ = 20 500
I = 3,4

Analyse élémentaire

| | % calculé | % trouvé |
|---|---|---|
| Carbone | 75 | 75,06 |
| Hydrogène | 5,46 | 5,63 |

Température de transition vitreuse Tg = 155°C

Spectre 1 H (solvant $CDCl_3$):

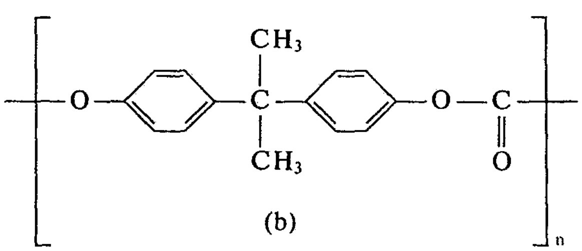

(b)

$\delta$ = 7,187 ppm (s) 8 Ha
$\delta$ = 1,67 ppm (s) 6 Hb

L. O. I = 27,5

## Exemples 3, 4 et 5

### Copolycarbonates de bisphénol A (B. A.) et de bis(hydroxy-4 phényl)-2,2 propylphosphonate de diméthyle

Les compositions comportent de 90 à 50% molaire en bisphénol A, les conditions opératoires sont celles décrites dans l'exemple 1. Les essais ont été réalisés sur 0,1 mole de composés dihydroxylés. Les résultats sont rassemblés dans le tableau I.

Exemple 6

Polycarbonate de bis(hydroxy-4 phényl)-2,2 propylphosphonate de diméthyle

Dans un ballon équipé comme il l'est décrit dans l'exemple 1 on dissout 16,66 g de bis (hydroxy-4 phényl)-2,2 propylphosphonate de diméthyle (0,0496 mole) dans 200 ml d'une solution de soude 0,75 N.

A la solution obtenue on introduit successivement 1 g de chlorure de triphénylbenzyl phosphonium à 98% soit $2,56 \times 10^{-3}$ mole et 100 ml de chlorure de méthylène.

Le milieu réactionnel est refroidi sous courant d'azote vers 5°C puis on introduit sous forte agitation en 50 minutes 29 ml d'une solution toluénique à 20% en phosgène ($COCl_2$ = 0,055 mole).

La température est maintenue entre 5 et 10°C le pH est supérieur à 13 pendant la durée d'introduction de la solution de phosgène.

L'addition terminée on maintient l'émulsion par forte agitation sous courant d'azote 1 heure à 30°C (±2°C). Après refroidissement on dilue avec 125 ml de $CH_2Cl_2$ et on décante.

La phase organique est lavée plusieurs fois à l'eau jusqu'à neutralité des eaux de lavage puis versée lentement dans un litre d'éther sous agitation. Le polycarbonate précité est traité comme on l'a déjà décrit dans l'exemple 1.

Le rendement en polycarbonate est de 80,2%

Les masses moléculaires sont:

$\overline{M}w$ = 31 100
$\overline{M}n$ = 9 200
I = 3,5

Analyse élémentaire

| | % calculé | % trouvé |
|---|---|---|
| Phosphore | 8,5 | 7,72 |

Tg = 142°C.
L. O. I = 36,5.

Spectre R M N $^1H$ (solvant $CDCl_3$):

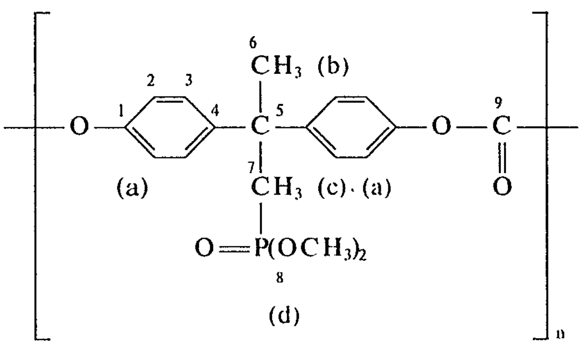

$\delta$ = 7,25 ppm (singulet) 8 Ha
$\delta$ = 3,37 ppm (doublet) 6 Hd, JP—Hd = 11 Hz
$\delta$ = 2,67 ppm (doublet) 2 Hc, JP—Hc = 20 Hz
$\delta$ = 1,937 ppm (singulet) 3 Hb

R M N $^{13}C$ (solvant $CDCl_3$):

$\delta$ = 152,1 ppm $C_1$
$\delta$ = 149,31 ppm $C_9$

| | |
|---|---|
| $\delta$ = 146,9–146,19 ppm | $C_4$ |
| $\delta$ = 128,38 ppm | $C_3$ |
| $\delta$ = 120,52 ppm | $C_2$ |
| $\delta$ = 52,17–51,71 ppm | $C_8$ |
| $\delta$ = 43,79 ppm | $C_5$ |
| $\delta$ = 33,26 ppm | $C_7$ |
| $\delta$ = 29,04 ppm | $C_6$ |

## Exemples 7 et 8

Copolycarbonates de bisphénol A et de bis(hydroxy-4 phényl)-2,2 propylphosphonate de diméthyle réalisés selon les conditions décrites dans l'exemple 6.

Les compositions comportent une proportion de 25 à 50% en mole de bisphénol A. Les résultats sont rassemblés dans le tableau II.

## Exemple 9

Polycarbonate de bis(hydroxy-4 phényl)-3,3 butylphosphonate de diméthyle

Les conditions opératoires sont celles décrites dans l'exemple 6.
Rendement 68%.

Analyse élémentaire

| | % calculé | % trouvé |
|---|---|---|
| Phosphore | 8,2 | 7,68 |

Tg = 101°C.
L. O. I = 0,35.

Spectre R M N $^1H$ (solvant $CDCl_3$):

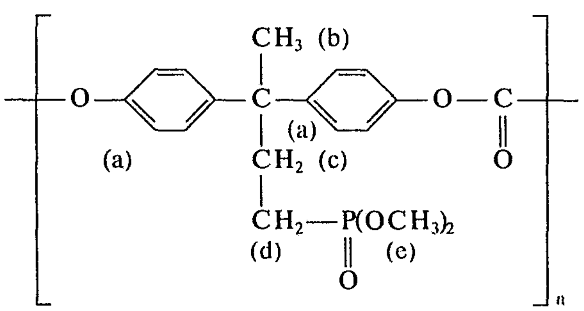

| | |
|---|---|
| $\delta$ = 7,25 ppm (singulet) | 8 Ha |
| $\delta$ = 3,71 ppm (doublet) | 6 He, JP—He = 11 Hz |
| $\delta$ = 1,62 ppm (singulet) | 3 Hb |

Les protons Hc et Hd, sortent sous la forme d'un massif étalé entre 2,62 et 2 ppm et sous les protons Hb.

Tableau I

| EX. | % molaire Bisphénol A / Bisphénol Phosphonate | GPC $\overline{Mw}$ | $\overline{Mn}$ | I | Analyse élémentaire du phosphore Calc. % | Tr. % | Rdt. % | Tg °C | L.O.I | Stabilité thermique $\Delta P$ % à 2 h à 250°C |
|---|---|---|---|---|---|---|---|---|---|---|
| 3 | 90/10 | 38680 | 13160 | 2,8 | 1,16 | 1,01 | 86 | 152 | 31 | 0,2 |
| 4 | 75/25 | 25050 | 9870 | 2,5 | 2,73 | 2,33 | 77 | 152 | 33 | 0,4 |
| 5 | 50/50 | 15400 | 6120 | 2,5 | 4,99 | 4,20 | 71 | 141 | 34 | |

Tableau II

| EX. | %molaire Bisphénol A / Bisphénol Phosphonate | GPC $\overline{Mw}$ | $\overline{Mn}$ | I | Analyse élémentaire Calc. | Tr. | Rdt. % | Tg °C | L.O.I |
|---|---|---|---|---|---|---|---|---|---|
| 7 | 50/50 | 157600 | 15000 | 10,5 | 4,99 | 4,80 | 65 | 151,5 | 35 |
| 8 | 25/75 | | | | 6,88 | 5,80 | 69 | 158 | 36 |

**Revendications**

1. (Co)polycarbonates dont la chaîne macromoléculaire consiste uniquement en motifs dérivés d'un diester d'acide bis(hydroxy-4 phényl)alcoyl phosphonique ou renferme 10 à 75% en mole desdits motifs phosphorés et 90 à 25% de motifs qui dérivent du bisphénol A et présentent la formule:

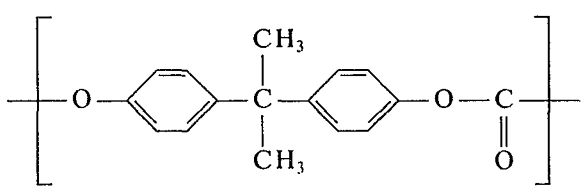

les motifs dérivés du diester répondant à la formule générale:

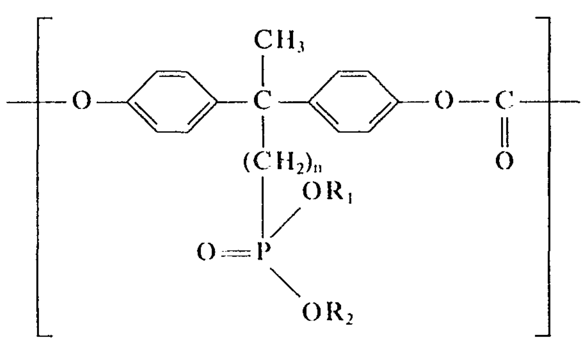

dans laquelle $R_1$ et $R_2$ désignent chacun un radical méthyle ou éthyle, et n est égal à 1, 2 ou 3.

2. (Co)polycarbonates selon la revendication 1, caractérisés en ce que les motifs dérivés du diester répondent à la formule

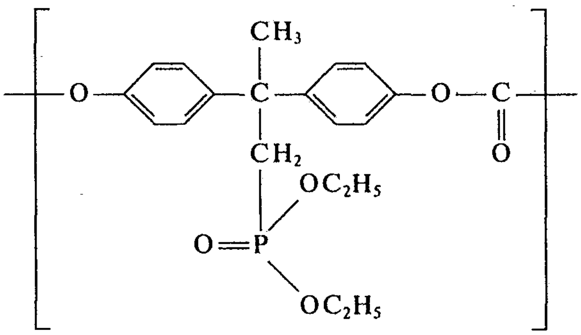

3. (Co)polycarbonates selon la revendication 1, caractérisés en ce que les motifs dérivés du diester répondent à la formule

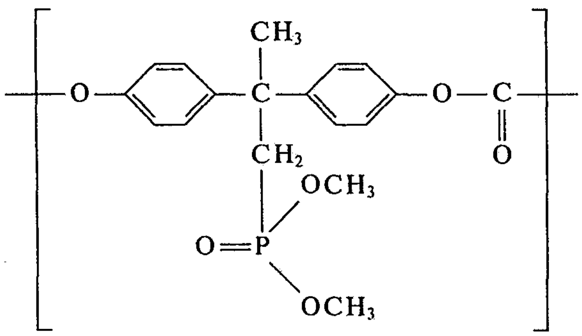

4. (Co)polycarbonates selon la revendication 1, caractérisés en ce que les motifs dérivés du diester répondent à la formule

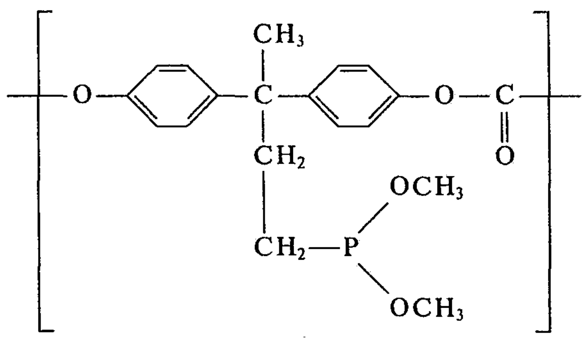

5. Procédé pour la préparation des (co)polycarbonates suivant la revendication 1, caractérisé en ce que l'on effectue une réaction interfaciale, à une température entre 5 et 30°C, entre le phosgène et une solution alcaline du diester ou d'un melange du diester et de bisphénol A dans la proportion de 10 à 75% en mole de diester par rapport au total des constituants diester et bisphénol A, ledit diester répondant à la formule générale:

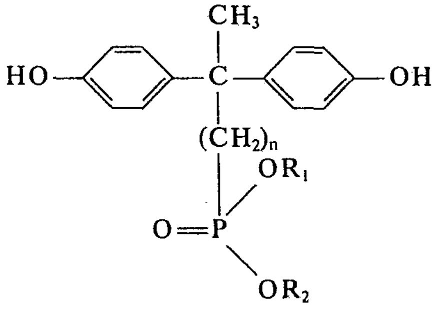

dans laquelle $R_1$ et $R_2$ désigne chacun un radical méthyle ou éthyle, et n est égal à 1, 2 ou 3.

6. Procédé selon la revendication 5, caractérisé en ce que le diester est le bis(hydroxy-4 phényl)-2,2 propylphosphonate de diéthyle.

7. Procédé selon la revendication 5, caractérisé en ce que le diester est le bis(hydroxy-4 phényl)-2,2 propylphosphonate de diméthyle.

8. Procédé selon la revendication 5, caractérisé en ce que le diester est le bis(hydroxy-4 phényl)-3,3 butylphosphonate de diméthyle.

**Patentansprüche**

1. (Co-)polycarbonate, deren Makromolekularkette ausschließlich aus von einem bis-(Hydroxy-4-phenyl)-alkylphosphonsäurediester abgeleiteten Struktureinheiten besteht oder 10 bis 75 Molprozent dieser phosphorierten Struktureinheiten und 90 bis 25% Struktureinheiten, die von Bisphenol A abgeleitet sind und die Formel

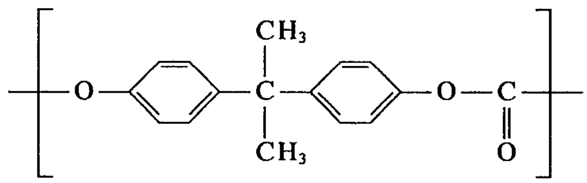

aufweisen, enthält,
wobei die von dem Diester abgeleiteten Struktureinheiten der allgemeinen Formel

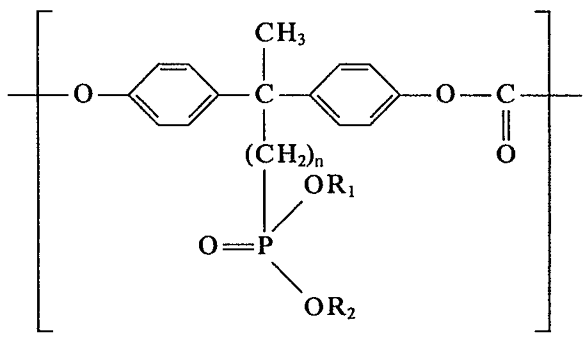

entsprechen,
in der $R_1$ und $R_2$ jeweils einen Methyl- oder Ethylrest darstellen und n 1, 2 oder 3 bedeutet.

2. (Co-)polycarbonate nach Anspruch 1, dadurch gekennzeichnet, daß die von dem Diester abgeleiteten Struktureinheiten der Formel

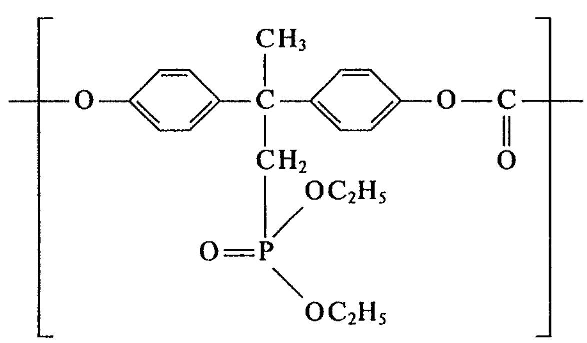

entsprechen.

3. (Co-)polycarbonate nach Anspruch 1, dadurch gekennzeichnet, daß die von dem Diester abgeleiteten Struktureinheiten der Formel

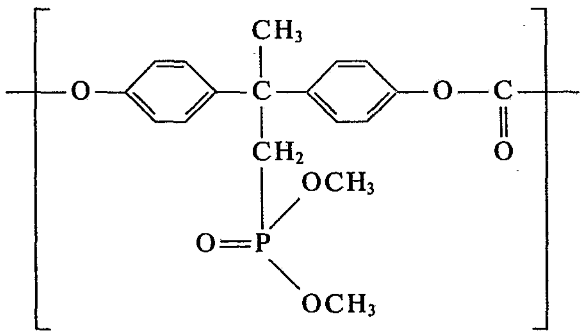

entsprechen.

4. (Co-)polycarbonate nach Anspruch 1, dadurch gekennzeichnet, daß die aus dem Diester abgeleiteten Struktureinheiten der Formel

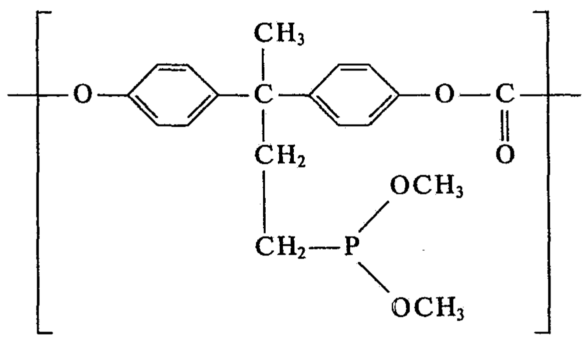

entsprechen.

5. Verfahren zur Herstellung von (Co-)polycarbonaten nach Anspruch 1, dadurch gekennzeichnet, daß man bei einer Temperatur zwischen 5 und 30°C eine Grenzflächenreaktion zwischen dem Phosgen und einer alkalischen Lösung des Diesters oder eines Gemisches des Diesters und von Bisphenol A in einem Verhältnis von 10 zu 75 Molprozent des Diesters zur Summe der Diester- und Bisphenol-A-Bestandteile durchführt, wobei der Diester der allgemeinen Formel

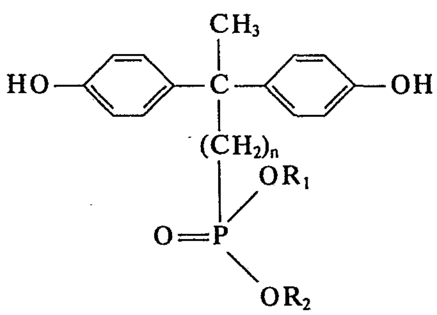

entspricht,
in der $R_1$ und $R_2$ jeweils einen Methyl- oder Ethylrest darstellen und n 1, 2 oder 3 bedeutet.

6. Verfahren nach Anspruch 5, dadurch gekennzeichnet, daß man als Diester Diethyl-2,2-bis(hydroxy-4-phenyl)propylphosphonat verwendet.

7. Verfahren nach Anspruch 5, dadurch gekennzeichnet, daß man als Diester Dimethyl-2,2-bis(hydroxy-4-phenyl)propylphosphonat verwendet.

8. Verfahren nach Anspruch 5, dadurch gekennzeichnet, daß man als Diester Dimethyl-3,3-bis(hydroxy-4-phenyl)butylphosphonat verwendet.

## Claims

1. (Co)polycarbonates, the macromolecular chain of which consists solely of units derived from a diester of bis(4-hydroxyphenyl) alkylphosphonic acid or contains 10 to 75 mole % of said units and 90

to 25 mole % of units derived from bisphenol A and having the formula:

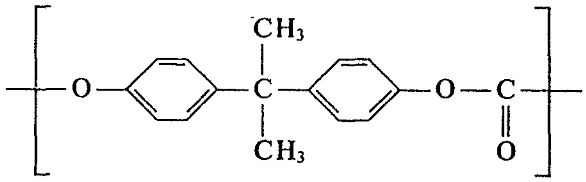

the units derived from the diester having the general formula:

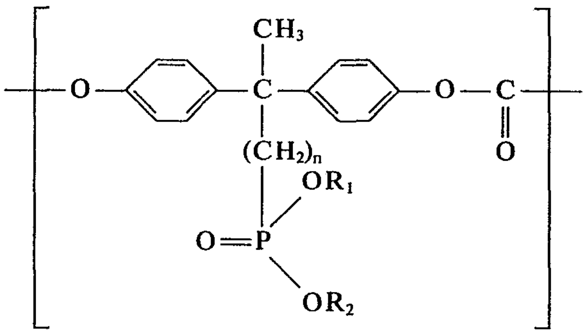

where $R_1$ and $R_2$ are each a methyl or ethyl radical and n is equal to 1, 2 or 3.

2. (Co)polycarbonates according to claim 1, characterised in that the units derived from the diester have the formula

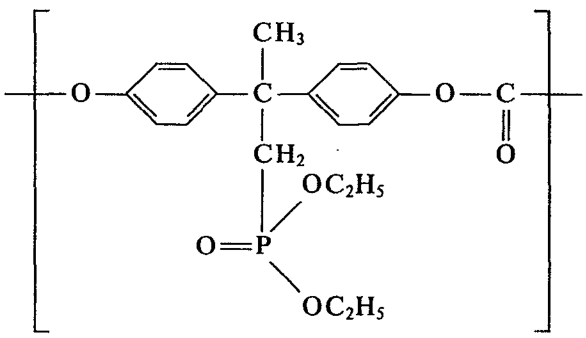

3. (Co)polycarbonates according to claim 1, characterised in that the units derived from the diester have the formula:

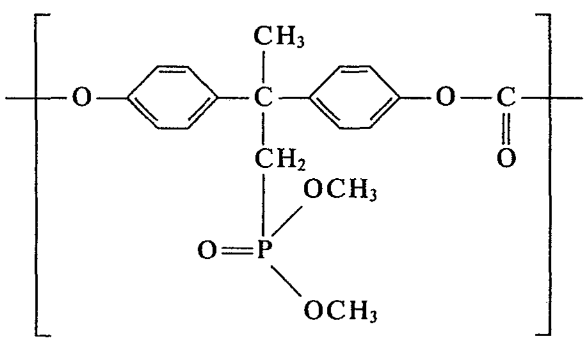

4. (Co)polycarbonates according to claim 1, characterised in that the units derived from the diester have the formula:

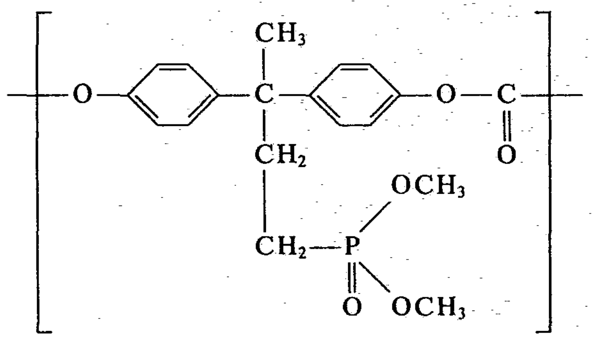

5. A process for the preparation of (Co)polycarbonates according to claim 1, characterised in that it comprises performing an interfacial reaction, at a temperature between 5 and 30°C, between phosgene and an alkaline solution of the diester or of a mixture of the diester and bisphenol A in a molar proportion of diester ranging from 10 to 75% based on the total amount of diester and bisphenol A, said diester having the general formula:

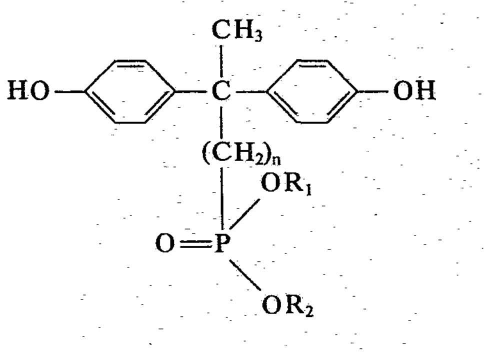

where $R_1$ and $R_2$ are each a methyl or ethyl radical and n is equal to 1, 2 or 3.

6. A process according to claim 5, characterised in that the diester is diethyl bis (4-hydroxyphenyl)-2.2-propylphosphonate.

7. A process according to claim 5, characterised in that the diester is dimethyl bis (4-hydroxyphenyl)-2.2-propylphosphonate.

8. A process according to claim 5, characterised in that the diester is dimethyl bis (4-hydroxyphenyl)-3.3-butylphosphonate.